# EUROPÄISCHE PATENTSCHRIFT

(11) **EP 3 307 682 B1**
(45) Veröffentlichungstag und Bekanntmachung des Hinweises auf die Patenterteilung: **10.03.2021**
(21) Anmeldenummer: 16723769.2
(22) Anmeldetag: 20.05.2016
(51) Int. Cl.: C02F 3/08, C02F 1/38, C02F 3/12, C12N 11/08, C02F 3/10

(54) **VERFAHREN ZUR BIOLOGISCHEN REINIGUNG VON ABWASSER MIT ERHÖHUNG DER BELEBTSCHLAMM-ABSETZGESCHWINDIGKEIT DURCH BIOFILMTRÄGER**
METHOD FOR BIOLOGICAL PURIFICATION OF WASTE WATER WITH ENHANCEMENT OF ACTIVATED SLUDGE SETTLING SPEED BY MEANS OF BIOFILM CARRIERS
PROCÉDÉ DE TRAITEMENT BIOLOGIQUE DES EAUX USÉES AVEC AMELIORATION DE LA VITESSE DE DÉCANTATION DES BOUES ACTIVÉES À L'AIDE DE SUPPORTS POUR BACTÉRIES

(30) Priorität: 09.06.2015 EP 15401058
(43) Veröffentlichungstag der Anmeldung: 18.04.2018
(73) Patentinhaber: Essde GmbH, 8738 Gommiswald (CH)
(72) Erfinder: NYHUIS, Geert, 8737 Gommiswald (CH)
(74) Vertreter: Scheffler, Jörg
(86) Internationale Anmeldenummer: PCT/EP2016/061397
(87) Internationale Veröffentlichungsnummer: WO 2016/198252

(56) Entgegenhaltungen:
- EP-A1- 0 685 433
- EP-A1- 2 022 763
- EP-A1- 2 039 659
- WO-A1-98/03433
- WO-A2-2015/179700
- DE-U1- 20 202 371
- GB-A- 2 032 904
- JP-A- S60 122 095
- US-A1- 2011 147 304
- US-A1- 2014 144 836
- TERRY L. JOHNSON ET AL: "INTEGRATED FIXED-FILM ACTIVATED SLUDGE (IFAS): THE NEW CHOICE FOR NITROGEN REMOVAL UPGRADES IN THE UNITED STATES", PROCEEDINGS OF THE ANNUAL WATER ENVIRONMENT FEDERATION TECHNICAL EXHIBITION AND CONFERENCE (WEFTEC ) AND SPECIALTY CONFERENCES, vol. 2004, no. 16, 1 January 2004 (2004-01-01), pages 296-318, XP055614721, US ISSN: 1938-6478, DOI: 10.2175/193864704784147214
- F. CLAUS ET AL: "Improving activated sludge floc structure and aggregation for enhanced settling and thickening performances", WATER SCI TECHNOL (1998) 38 (8-9): 35-44., vol. 38, no. 8-9, 1 October 1998 (1998-10-01), pages 35-44, XP055617412,

## Beschreibung

Die Erfindung betrifft ein Verfahren zur biologischen Reinigung von Abwasser in einer zumindest ein Belebungsbecken aufweisenden Belebungsanlage, bei welchem das Abwasser in dem Belebungsbecken mit Belebtschlamm in Kontakt gebracht und gereinigt wird und bei welchem der suspendierte Belebtschlamm nach der Reinigung des Abwassers in einem dem Belebungsbecken nachgeschalteten Nachklärbecken (konventionelle Belebungsanlage) oder im Belebungsbecken (SBR-Anlage) durch Sedimentation von dem gereinigten Abwasser getrennt wird.

Kommunale und industrielle Abwässer enthalten außer Sandbeimengungen grobe, schwimmende Schmutzstoffe, faulende Stoffe, Schlamm bildende Schwebstoffe, gelöste organische Stoffe und Bakterien. Bei der mechanischen Abwasserreinigung werden die ungelösten Stoffe abgeschieden. Grobe Verunreinigungen werden durch Rechen zurückgehalten, der Sand im Sandfang, der Schlamm im Klär- oder Schlammabsetzbecken ausgeschieden. Vorklärbecken dienen der Entfernung von Sinkstoffen aus dem Abwasser. Die nach der mechanischen Abwasserreinigung noch enthaltenen gelösten, fäulnisfähigen organischen Stoffe werden bei der biologischen Abwasserreinigung durch die im Abwasser befindlichen Bakterien abgebaut.

Das eingangs beschriebene Verfahren ist bereits seit Jahren Stand der Technik und ist das meistverwendete Verfahren zur biologischen Reinigung von Abwasser in Kläranlagen. Dabei wird das zumeist kommunale Abwasser durch die Stoffwechsel-Aktivität von aeroben chemoorganoheterotrophen Mikroorganismen, dem sogenannten Belebtschlamm, weitestgehend von organischen Verunreinigungen befreit, also gereinigt. Das Verfahren setzt nach der Abtrennung bzw. Abscheidung der Grobanteile ein, die entwässert, separiert, ausgefault und verbrannt werden. Für kommunale Abwässer gehört dieses Verfahren zu den klassischen intensiven Aufbereitungsverfahren. Vorteilhaft ist die allgemeine Verwendbarkeit und die gute Reinigungswirkung für Abwässer zur Verminderung der Gehalte an Schwebstoffen, dem Chemischen Sauerstoffbedarf (CSB), dem Biochemischen Sauerstoffbedarf (BSB5) und den Stickstoffverbindungen (N).

Anlagen nach dem Belebtschlammverfahren können sowohl kontinuierlich, d. h. im Durchlaufbetrieb (konventionelle Belebungsanlage) als auch diskontinuierlich (SBR-Anlage) betrieben werden. Weiterhin existieren auch noch sogenannte Membranbelebungsanlagen, bei welchen mittels einer Membran das gereinigte Wasser vom Schlamm abgetrennt wird.

Gemein ist allen Varianten, dass die im Wasser suspendierte Bakterienmasse oder Biomasse, welche auch als Belebtschlamm bezeichnet wird, die biologische Reinigung des Abwassers übernimmt. Hierzu weist jede Anlage zumindest ein Belebungsbecken auf, in welchem das Abwasser mit dem Belebtschlamm versetzt und damit in einen intensiven Kontakt mit dem Belebtschlamm gebracht wird.

Als Belebtschlamm wird die bei der aeroben biologischen Abwasserreinigung durch den Abbau der Abwasserinhaltsstoffe im Belebungsbecken gebildete Biomasse bezeichnet. Sie besteht im Wesentlichen aus Mikroorganismen, wie beispielsweise Bakterien, Pilzen, Protozoen, EPS (extrazelluläre polymere Substanzen) und weiteren Bestandteilen. Mikroskopische Untersuchungen belegen, dass der Belebtschlamm von Bakterien und Protozoen "belebt" ist. Deshalb wird er auch Belebtschlamm genannt. Der Belebtschlamm liegt bei der technischen Nutzung im Belebtschlammverfahren in der Regel in Form von Belebtschlammflocken vor, die neben lebender und toter Biomasse adsorbierte und eingelagerte organische Verbindungen und Mineralstoffe enthalten.

Beim Belebtschlammverfahren erfolgt nach dem Abbau der Schadstoffe im Abwasser durch den Belebtschlamm eine Trennung dieses Schlammes vom gereinigten Wasser in der sogenannten Nachklärung. Ein Großteil des abgetrennten Schlammes wird in das Belebungsbecken als Rücklaufschlamm oder Rezirkulationsschlamm zurückgeführt. Dadurch wird sichergestellt, dass die Belebtschlammkonzentration im Belebungsbecken aufrecht gehalten werden kann. Die im Rücklaufschlamm enthaltenen belebten Flocken erneuern die Reinigungskraft der Belebung. Der nicht rezirkulierte, kleinere Volumenstrom des Belebtschlammes wird Überschussschlamm genannt. Der Überschussschlamm ist also der Teil des Belebtschlammes, der zur Konstanthaltung der gewünschten Biomassenkonzentration abgezogen und in die Schlammbehandlung gepumpt wird. Dieser entfernte Biomassenzuwachs wird in der Regel zusammen mit dem Primärschlamm der Schlammfaulung und schließlich der Schlammentwässerung zugeführt.

In dem Belebtschlamm bilden sich unter bestimmten Randbedingungen, insbesondere bei Belebungsanlagen mit einer niedrigen Schlammbelastung (< 0,2 kg BSB₅/(kg TS d)), fädige Bakterien (Blähschlamm), die den Absetzvorgang in dem Nachklärbecken oder bei einer SBR-Anlage in dem Belebungsbecken behindern und zum Abtrieb von Belebtschlamm führen können und damit die Ablaufqualität massiv beeinträchtigen. Mehr als 65 % aller Belebungsanlagen haben zeitweise ein Blähschlammproblem. Die Absetzeigenschaften des Schlammes stellen den entscheidenden Parameter bei der Bemessung einer Belebungsanlage dar.

Die häufigsten fädigen Bakterien sind Bakterien vom Typ Microthrix parvicella, Nocardia, Typ 021 N und weitere. Durch die fädige Struktur behindern diese Bakterien das Absetzen des Schlammes, sodass eine ungenügende Schlammwassertrennung stattfindet.

Diesem Problem wird häufig durch unspezifische Maßnahmen, wie beispielsweise die Zugabe von Fällungsmitteln auf Aluminium-Basis in das Belebungsbecken begegnet. Allerdings gelingt es häufig nicht, die Absetzeigenschaften in dem gewünschten Maß zu verbessern. Außerdem wird durch die Zugabe dieser Chemikalien zusätzlich Schlamm produziert, der anschließend entsorgt werden muss.

Auch bei sehr hochbelasteten Belebungsstufen, zum Beispiel Adsorptionsstufen, auch A-Stufen genannt (Schlammbelastung > 2 kg BSB₅/(kg TS d)) besteht das wesentliche Problem darin, einen gut absetzbaren Schlamm zu erzielen. Die Absetzbarkeit des Belebtschlammes in der A-Stufe und entsprechend das Absetzen und die Rückführung in die hochbelastete Belebungsstufe stellen die wesentliche Herausforderung bei der Bemessung und beim Betrieb einer solchen Anlage dar.

Die Absetzeigenschaften des Belebtschlammes bestimmen die Größe der Nachklärung (Absetzbecken bzw. Nachklärbecken). Je schlechter sich der Belebtschlamm absetzt, desto grösser muss die Nachklärung dimensioniert werden. Je besser sich der Schlamm absetzt, desto kleiner kann die Nachklärung sein, desto höher kann die Belebtschlammkonzentration im Belebungsbecken sein und entsprechend kleiner kann das erforderliche Volumen des Belebungsbeckens bzw. des Nachklärbeckens dimensioniert werden. Die Schlammabsetzeigenschaften sind entscheidend für die Größe der gesamten Belebungsanlage und prägen die Erstellungskosten der Belebungsanlage entscheidend GB 2 032 904 A offenbart ein Verfahren zur biologischen Reinigung von Abwasser mit Beschwerung von Belebtschlamm durch Zugabe von Aufwuchskörpern aus verschiedenen Materialien wie synthetischen Kunststoffen, Aktivkohle, Kohle, usw. Das Dokument offenbart eine Separiervorrichtung in welcher die Aufwuchskörper von dem Belebtschlamm getrennt werden.

Die WO 2015/179700 A2 offenbart ein Verfahren zur biologischen Reinigung von Abwasser in einer zumindest ein Belebungsbecken aufweisenden Belebungsanlage, bei welchem das Abwasser in dem Belebungsbecken mit Belebtschlamm in Kontakt gebracht und gereinigt wird und bei welchem der suspendierte Belebtschlamm nach der Reinigung des Abwassers in einem dem Belebungsbecken nachgeschalteten Nachklärbecken durch Sedimentation von dem gereinigten Abwasser getrennt wird. Hierbei wird der im Abwasser suspendierte Belebtschlamm in dem Belebungsbecken mit Aufwuchskörpern versetzt, um die Aufwuchskörper in Kontakt mit den im Belebtschlamm enthaltenen Mikroorganismen zu bringen und das Entstehen eines Biofilmes aus Mikroorganismen auf den Aufwuchskörpern zu bewirken. Die Aufwuchskörper sind aus elastisch verformbarem Material aus einem Kunststoff gebildet und weisen eine größere Dichte auf als das Abwasser und als der suspendierte Belebtschlamm, um eine Erhöhung der Absetzgeschwindigkeit des Belebtschlammes während der Sedimentation in dem Nachklärbecken oder dem Belebungsbecken zu bewirken. Ein überschüssiger Anteil des sedimentierten und die bewachsenen Aufwuchskörper enthaltenen Belebtschlammes wird als Überschussschlamm aus dem Nachklärbecken oder dem Belebungsbecken abgeführt, während der andere Anteil des sedimentierten und die bewachsenen Aufwuchskörper enthaltener Belebtschlammes als Rückführschlamm aus dem Nachklärbecken in das Belebungsbecken zurückgeführt wird, wobei der abgeführte Überschussschlamm einer als Hydrozyklon ausgebildeten Separiervorrichtung zugeführt wird. In dem Hydrozyklon werden die bewachsenen Aufwuchskörper von dem Belebtschlamm getrennt, wobei die Aufwuchskörper durch einen Unterlauf des Hydrozyklons in das Belebungsbecken der Belebungsanlage zurückgeführt werden und der abgetrennte Belebtschlamm durch einen Oberlauf des Hydrozyklons austritt und einer Schlammbehandlung zugeführt oder entsorgt wird. Nach der Einleitung des Überschussschlammes in den Hydrozyklon werden die im Vergleich zu dem Belebtschlamm eine größere Dichte aufweisenden Aufwuchskörper durch die Fließ- und Strömungskräfte im Hydrozyklon an einer Wandfläche des Hydrozyklons abgeschieden.

Der Erfindung liegt die Aufgabe zugrunde, ein Verfahren zur biologischen Reinigung von Abwasser mit verbesserten Schlammabsetzeigenschaften zur Verfügung zu stellen.

Diese Aufgabe wird erfindungsgemäß mit einem Verfahren gemäß den Merkmalen des Anspruches 1 gelöst. Die weitere Ausgestaltung der Erfindung ist den Unteransprüchen zu entnehmen.

Erfindungsgemäß ist also ein Verfahren zur biologischen Reinigung von Abwasser vorgesehen, bei welchem der im Abwasser suspendierte Belebtschlamm in dem Belebungsbecken mit Aufwuchskörpern versetzt wird, um die Aufwuchskörper in Kontakt mit den im Belebtschlamm enthaltenen Mikroorganismen zu bringen und das Entstehen eines Biofilmes aus Mikroorganismen auf den Aufwuchskörpern zu bewirken und bei dem die aus Kunststoff oder Kautschuk bestehenden Aufwuchskörper eine größere Dichte aufweisen als das Abwasser und der suspendierte Belebtschlamm, um eine Erhöhung der Absetzgeschwindigkeit des Belebtschlammes während der Sedimentation in dem Nachklärbecken (konventionelle Belebungsanlage) oder dem Belebungsbecken (SBR-Anlage) zu bewirken, wobei ein überschüssiger Anteil des sedimentierten und die bewachsenen Aufwuchskörper enthaltenen Belebtschlammes als Überschussschlamm aus dem Nachklärbecken oder dem Belebungsbecken abgeführt wird, während der andere Anteil des sedimentierten und die bewachsenen Aufwuchskörper enthaltenen Belebtschlammes entweder als Rückführschlamm aus dem Nachklärbecken in das Belebungsbecken zurückgeführt wird (konventionelle Belebungsanlage) oder im Belebungsbecken verbleibt (SBR-Anlage), wobei der abgeführte Überschussschlamm einer als Hydrozyklon ausgebildeten Separiervorrichtung zugeführt wird, in welcher die bewachsenen Aufwuchskörper von dem Belebtschlamm getrennt werden, wobei die Aufwuchskörper durch einen Unterlauf des Hydrozyklons in das Belebungsbecken der Belebungsanlage zurückgeführt werden und der abgetrennte Belebtschlamm durch einen Oberlauf des Hydrozyklons austritt und einer Schlammbehandlung zugeführt oder entsorgt wird, wobei nach der Einleitung des Überschussschlammes in den Hydrozyklon die im Vergleich zu dem Belebtschlamm eine größere Dichte aufweisenden Aufwuchskörper durch die Fließ- und Strömungskräfte im Hydrozyklon an einer Wandfläche des Hydrozyklons abgeschieden werden, wobei durch die Relativbewegung der sich bewegenden Aufwuchskörper und der ortsfesten Wandfläche des Hydrozyklons Kräfte, insbesondere Abrasiv- oder Scherkräfte, erzeugt werden, durch welche der auf den Aufwuchskörpern vorhandene Biofilm zumindest teilweise von den Aufwuchskörpern abgetragen wird, wobei Aufwuchskörper aus einem Material mit einer Reißdehnung von mehr als 700 % und mit einem Druckverformungsrest unter 50 % verwendet werden.

Nach der Einleitung des Überschussschlammes werden in den Hydrozyklon die im Vergleich zu dem Belebtschlamm eine größere Dichte aufweisenden Aufwuchskörper durch die Flieh-, Fließ- und Strömungskräfte im Hydrozyklon an einer Wandfläche des Hydrozyklons abgeschieden, wobei durch die Relativbewegung der sich bewegenden Aufwuchskörper und der ortsfesten Wandfläche des Hydrozyklons Kräfte, insbesondere Abrasiv- oder Scherkräfte, erzeugt werden, durch welche der auf den Aufwuchskörpern vorhandene Biofilm zumindest teilweise von dem Aufwuchskörper abgetragen wird. Die eingeleiteten Kräfte führen zu einem Abscheren bzw. zu einem Abrieb des Biofilmes auf den Aufwuchskörpern, infolge welcher die Dicke des Biofilmes auf der Oberfläche der Aufwuchskörper erheblich reduziert wird. Die abgescherten bzw. abgeriebenen Bakterien des Biofilmes werden dann zusammen mit dem abgetrennten Belebtschlamm entsorgt. Vorzugsweise bleibt eine dünne Schicht des Biofilmes auf den Aufwuchskörpern bestehen, sodass diese nach der Rückführung in das Belebungsbecken ihre volle Leistungsfähigkeit entwickeln können. Ansonsten müssten die Aufwuchskörper in dem Belebungsbecken neu besiedelt werden, was das Reinigungsverfahren verlangsamen und die Leistungsfähigkeit der Belebungsanlage einschränken würde. Das Abtragen des Biofilmes von den Aufwuchskörpern wird auch dadurch unterstützt, dass die ortsfeste Wandfläche des Hydrozyklons, insbesondere der untere konische Abschnitt, eine aufgeraute Oberfläche aufweist. In vorteilhafter Weise hat die Oberfläche der ortsfesten Wandfläche eine mittlere Rauheit zwischen 50 und 200 µm, bevorzugt zwischen 95 und 105 µm, besonders bevorzugt von 100 µm.

Um eine Zerstörung oder Beschädigung der Aufwuchskörper während der Separierung bzw. eine Beschädigung der Separiervorrichtung, insbesondere des Hydrozyklons, zu vermeiden, bestehen die Aufwuchskörper aus einem elastisch verformbaren Material. Hierbei können die Aufwuchskörper aus thermoplastischem Kunststoff, insbesondere PVDF (Polyvinylidenfluorid), ECTFE (Chlortrifluorethylen-Fluorcopolymer), ETFE (Ethylen-Tetrafluorethylen), FEP (Fluorethylenpropylen), PFA (Perfluoralkoxy-Polymere), oder aus einem synthetischen Kautschuk, insbesondere EPDM (Ethylen-Propylen-Dien-Kautschuk), oder aus einem Material auf der Basis von elastischen Polyurethanbindemitteln bestehen.

Gemäß der vorliegenden Erfindung werden Aufwuchskörper aus einem Material mit einem Druckverformungsrest unter 50 % verwendet. Der Druckverformungsrest (DVR, 72h@RT, DIN ISO 815-1) ist ein Maß dafür, wie sich Elastomere bei lang andauernder, konstanter Druckverformung und anschließender Entspannung verhalten. Ein DVR von 0 % bedeutet, dass der Körper seine ursprüngliche Dicke wieder voll erreicht hat (in der Realität unmöglich), ein DVR von 100 % sagt, dass der Körper während des Versuchs völlig verformt wurde und keine Rückstellung zeigt.

Hierdurch werden die Schlammabsetzeigenschaften wesentlich verbessert, da die Absetzgeschwindigkeit der Mischung aus bewachsenen Aufwuchskörpern und suspendiertem Belebtschlamm während der Sedimentation wesentlich höher ist als die Absetzgeschwindigkeit eines suspendierten Belebtschlammes ohne Aufwuchskörper. Die Gründe hierfür sind die im Vergleich zum Belebtschlamm höhere Dichte der Aufwuchskörper und die Beschwerung des sedimentierten Schlammbettes in der Nachklärung durch die schweren Aufwuchskörper. Die im Abwasser suspendierten Belebtschlammflocken, welche aufgrund ihrer geringeren Dichte eigentlich eine langsamere Absetzgeschwindigkeit aufweisen, werden während der Sedimentation in dem sich bildenden Schlammbett mit den sich schneller absetzenden Aufwuchskörpern mitgeführt und weisen dadurch dieselbe hohe Absetzgeschwindigkeit auf, wie die Aufwuchskörper.

Während in herkömmlichen Belebungsanlagen ohne die Zugabe von Aufwuchskörpern Sedimentationsgeschwindigkeiten von 0,2-3 m/h erreicht werden, kann die Absetzgeschwindigkeit durch das erfindungsgemäße Verfahren auf 3-6 m/h erhöht werden. Hieraus resultierend kann sowohl das Belebungsbecken als auch das Nachklärbecken wesentlich kleiner gebaut werden, wodurch die Erstellungskosten der Belebungsanlage insgesamt wesentlich reduziert werden können. Bei bereits bestehenden Belebungsanlagen kann durch das erfindungsgemäße Verfahren die Leistung gesteigert werden, sodass Erweiterungen der Anlage vermieden werden können.

Das Verfahren kann in einer konventionellen Belebungsanlage mit einem kontinuierlich durchflossenen Belebungsbecken und einem nachgeschalteten Absetz- bzw. Nachklärbecken oder in einer SBR-Anlage (sequencing batch reactor) mit einem Belebungsbecken, in welchem die Prozesse zeitlich nacheinander stattfinden, durchgeführt werden. Optional ist dem Belebungsbecken der jeweiligen Belebungsanlage ein Vorklärbecken vorgeschaltet.

Den Mikroorganismen bzw. mikrobiellen Aggregaten im Belebtschlamm, welche als Flocken, Schleime oder Biofilme auftreten, ist gemein, dass sie in eine Matrix aus extrazellulären, polymeren Substanzen (EPS) eingebettet sind, die sie zusammenhält und sie gegebenenfalls an Oberflächen bzw. festen Medien bindet. Die Mikroorganismen bzw. mikrobiellen Aggregate siedeln bevorzugt an der Grenzfläche zwischen festen Medien und Wasser. Hier ist die Substratversorgung durch die hohe Relativgeschwindigkeit optimal. Nach der festen Verankerung erfolgt die Phase der mikrobiellen Akkumulation, die vor allem durch die Vermehrung der Bakterien bestimmt wird. Gleichzeitig wird mehr EPS gebildet und die Dicke des Biofilmes an der Oberfläche des Festkörpers wächst. Die Voraussetzungen für den Aufwuchs an Oberflächen sind also denkbar einfach - es müssen raue Grenzflächen, mikrobiell verwertbare Nährstoffe und die Mikroorganismen selbst vorhanden sein.

Diesen Effekt bzw. diese Erkenntnis macht sich die Erfindung zunutze. Durch die Zugabe von Aufwuchskörpern in den Belebtschlamm bzw. das Gemisch aus Abwasser und Belebtschlamm werden die benötigten Grenzflächen zum Aufwuchs der EPS zur Verfügung gestellt. Die mikrobiell verwertbaren Nährstoffe für die Mikroorganismen im Belebtschlamm werden durch das Abwasser zur Verfügung gestellt.

Gemäß der vorliegenden Erfindung wird der abgeführte Überschussschlamm einer als Hydrozyklon ausgebildeten J Z Separiervorrichtung zugeführt wird, in welcher die bewachsenen Aufwuchskörper von dem Belebtschlamm getrennt werden, wobei die Aufwuchskörper in das Belebungsbecken der Belebungsanlage zurückgeführt werden und der abgetrennte Belebtschlamm einer Schlammbehandlung zugeführt oder entsorgt wird. Hierdurch wird eine Entsorgung bzw. ein Verlust der im Überschussschlamm enthaltenen Aufwuchskörper aus der Belebungsanlage verhindert. Die im Überschussschlamm enthaltenen Aufwuchskörper werden also genauso wie die im Rückführschlamm enthaltenen Aufwuchskörper zurück in das Belebungsbecken geführt und stehen weiterhin für die biologische Reinigung von Abwasser im Belebungsbecken zur Verfügung. Hierdurch ist eine einmalige Zuführung der Aufwuchskörper in das Belebungsbecken ausreichend, da die Aufwuchskörper in einem Kreislauf immer wieder vollständig bzw. vollzählig in das Belebungsbecken zurückgeführt werden.

Die Separierung des Überschussschlammes wird in einem Hydrozyklon durchgeführt. Durch einen Hydrozyklon, auch Fliehkraftabscheider genannt, lassen sich die im Überschussschlamm enthaltenen bewachsenen Aufwuchskörper besonders schnell und prozesssicher von dem im Überschussschlamm enthaltenen Belebtschlamm trennen. Aufgrund der gegenüber dem Belebschlamm größeren Dichte der Aufwuchskörper treten diese durch einen Unterlauf des Hydrozyklons aus und werden in das Belebungsbecken zurückgeführt. Dagegen tritt der eine geringere Dichte aufweisende Belebtschlamm aus dem Oberlauf des Hydrozyklons aus und wird dann entsorgt bzw. einer Schlammfaulung zugeführt.

Weiterhin erweist es sich als zweckmäßig, dass während der Trennung der bewachsenen Aufwuchskörper vom Belebtschlamm in der Separiervorrichtung der auf den Aufwuchskörpern angeordnete Biofilm zumindest teilweise abgetragen wird. Die Dicke des Biofilmes auf den Aufwuchskörpern nimmt über die Zeit zu. Mit zunehmender Dicke des Biofilmes werden die Substratversorgung und damit die Aktivität der unten angesiedelten Bakterien bzw. der als erstes auf den Aufwuchskörpern angesiedelten Bakterien durch Diffusion begrenzt. Dieses Problem wird dadurch gelöst, dass zumindest die oberen bzw. äußeren Schichten des Biofilmes in der Separiervorrichtung abgetragen werden. Hierdurch wird die Dicke des Biofilmes deutlich reduziert, sodass dieser nach der Rückführung in das Belebungsbecken eine hohe Aktivität bzw. Leistungsfähigkeit aufweist.

Dabei erweist es sich als sinnvoll, dass ein Hydrozyklon verwendet wird, in welchem der eingeleitete Überschussschlamm Fliehkräften vom 50- bis 160-fachen der Erdbeschleunigung (g) ausgesetzt wird. Bei Fliehkräften in dieser Größenordnung und daraus resultierenden hohen Geschwindigkeiten ist gewährleistet, dass einerseits die Aufwuchskörper von dem Belebtschlamm getrennt werden und anderseits die Kräfte ausreichend hoch sind, um die Dicke des Biofilmes im gewünschten Maße zu reduzieren.

Eine Ausgestaltung eines Verfahrens nicht gemäß der vorliegenden Erfindung sieht vor, dass die Separierung des Überschussschlammes in einem Sieb oder einer Siebmaschine durchgeführt wird. Hierbei werden die vom Belebtschlamm abgetrennten Aufwuchskörper aus einem Siebrückstand in das Belebungsbecken zurückgeführt, während der überschüssige Belebtschlamm aus einem Siebdurchgang der weiteren Schlammbehandlung zugeführt oder entsorgt wird.

Es erweist sich als zweckmäßig, dass ein Sieb oder eine Siebmaschine mit einem Siebbelag verwendet wird, dessen Durchgangsöffnungen eine Maschenweite aufweisen, welche kleiner ist als die Aufwuchskörper. Vorzugsweise weisen die Durchgangsöffnungen eine Maschenweite zwischen 0,01 und 10 mm auf. Hierdurch wird ein Verbleiben der Aufwuchskörper im Siebrückstand gewährleistet und ein Verschließen bzw. Verstopfen der Durchgangsöffnungen durch den Belebtschlamm verhindert. Dabei hat es hat sich als praxisgerecht erwiesen, dass die Durchgangsöffnungen eine einheitliche Maschenweite aufweisen.

Eine vorteilhafte Aufführungsform nicht gemäß der vorliegenden Erfindung sieht vor, dass die im Uberschussschlamm enthaltenen bewachsenen Aufwuchskörper während eines Siebvorganges mit einer Rüttel- oder Vibrationsbewegung beaufschlagt werden und dadurch den Siebbelag derart kontaktieren, dass Kräfte auf die Aufwuchskörper wirken, durch welche der Biofilm auf den Aufwuchskörpern zumindest teilweise abgetragen wird. Die einwirkenden bzw. eingeleiteten Kräfte führen zu einem Abscheren bzw. zu einem Abrieb des Biofilmes auf den Aufwuchskörpern, in Folge welcher die Dicke des Biofilmes erheblich reduziert wird. Die abgescherten bzw. abgeriebenen Bakterien des Biofilmes werden dann zusammen mit dem Belebtschlamm durch den Siebdurchgang entsorgt, während die Aufwuchskörper in das Belebungsbecken zurückgeführt werden.

Zur Gewährleistung einer hohen Leistungsfähigkeit der Belebungsanlage und einer hohen Absetzgeschwindigkeit des Belebtschlammes während der Nachklärung hat es sich als besonders zweckmäßig erwiesen, dass Aufwuchskörper verwendet werden, welche eine Dichte (nach DIN EN ISO 1183-1) zwischen 1,05 kg/dm³ und 3,0 kg/dm³, bevorzugt zwischen 1,5 kg/dm³ und 1,7 kg/dm³, aufweisen. Aufwuchskörper mit einer geringeren Dichte würden nicht die gewünschte Absetzgeschwindigkeit während der Sedimentation in der Nachklärung erzielen. Aufwuchskörper mit einer höheren Dichte würden sich bereits während der belüfteten biologischen Reinigungsphase des Abwassers im Belebungsbecken absetzen, sodass die Leistungsfähigkeit der Belebungsanlage nicht gewährleistet werden könnte.

Weiterhin werden in zweckmäßiger Weise Aufwuchskörper verwendet, welche eine Größe zwischen 0,01 mm und 10 mm, bevorzugt zwischen 0,2 mm und 1,0 mm, aufweisen. Bei kleineren Aufwuchskörpern besteht die Gefahr, dass diese in der Separiervorrichtung, insbesondere im Hydrozyklon nicht prozesssicher von dem Belebtschlamm getrennt werden können, mit der Folge, dass die Aufwuchskörper nicht vollständig in das Belebungsbecken zurückgeführt werden können. In diesem Fall müssten dann kontinuierlich neue zusätzliche Aufwuchskörper in das Belebungsbecken eingebracht werden. Bei größeren Aufwuchskörpern besteht die Gefahr, dass die Separiervorrichtung, insbesondere der Hydrozyklon, aufgrund der hohen Geschwindigkeit im Hydrozyklon beschädigt wird. Hierbei ist auch eine Beschädigung der Aufwuchskörper zu erwarten, welche zu einem Materialverlust führt. Die geometrische Form der granulartigen Aufwuchskörper unterliegt keinen Restriktionen. Denkbar sind sowohl regelmäßig geformte als auch unregelmäßig geformte dreidimensionale Körper. Dabei betrifft die Größe von 0,01 bis 10 mm bzw. 0,2 bis 1,0 mm die Abmessung in Richtung der Haupterstreckung des Körpers. Vorzugsweise ist eine Oberfläche der Aufwuchskörper angeraut bzw. weist Strukturen auf, um ein Ansiedeln der Mikroorganismen auf der Oberfläche zu unterstützen.

Aus Gründen der Prozesssicherheit des erfindungsgemäßen Verfahrens, insbesondere zur sicheren Abtrennung der Aufwuchskörper im Hydrozyklon, ist es zweckmäßig, dass die in das Belebungsbecken eingebrachten Aufwuchskörper eine einheitliche Größe aufweisen.

Schließlich erweist es sich als besonders vorteilhaft, dass sich das erfindungsgemäße Verfahren in Belebungsanlagen durchführen lässt, welche eine Schlammbelastung zwischen 0,05 kg BSB5/(kg TS d) und 6 kg BSB₅/(kg TS d) aufweisen. Hierdurch kann eine hohe Absetzgeschwindigkeit des Belebtschlammes sowohl bei niedriger Schlammbelastung (< 0,2 kg BSB₅/(kg TS d)) als auch bei sehr hoch belasteten Belebungsstufen (> 2 kg BSB₅/(kg TS d)) gewährleistet werden. Die Schlammbelastung stellt das Verhältnis der täglich zugeführten BSB₅-Fracht im Abwasser zur im Belebungsbecken vorhandenen Biomasse dar, wobei die Biomasse als Trockensubstanz (TS), manchmal auch als organischer Teil der TS bestimmt wird [kg BSB₅/(kg TS d)].

Erfindungsgemäß ist vorgesehen, dass die Aufwuchskörper aus einem Material bestehen, welches eine hohe Viskoelastizität aufweist bzw. dass das Material einen hohen viskoelastischen Anteil aufweist. Dies ist erforderlich, um einerseits die maschinentechnischen Einrichtungen der SBR-Anlage bzw. der Belebungsanlage, wie beispielsweise Pumpen, Rührwerke und Hydrozyklone nicht zu beschädigen und um andererseits das weitgehende Abscheren des Biofilmes von den Aufwuchskörpern im Hydrozyklon zu ermöglichen. Hierbei ist es das Ziel, bei jedem Durchlauf durch den Hydrozyklon eine weitgehende, aber nicht vollständige Abscherung des Biofilmes zu erzielen. Bei einem vollständigen Abscheren müssten die Aufwuchskörper nach der Rückführung ins Belebungsbecken neu besiedelt werden, was das Reinigungsverfahren insgesamt verlangsamen und die Leistungsfähigkeit der Belebungsanlage bzw. der SBR-Anlage beschränken würde. Wenn überhaupt kein Abscheren des Biofilmes erfolgen würde, würde die Dicke des Biofilmes auf den Aufwuchskörper immer weiter zunehmen. Mit zunehmender Dicke des Biofilmes werden die Substratversorgung und damit die Aktivität der unten angesiedelten Bakterien bzw. der als erstes auf den Aufwuchskörpern angesiedelten Bakterien durch Diffusion begrenzt. Diese wachsende inerte bzw. anaerobe Bakterienschicht stellt im weiteren Verfahrensablauf lediglich Ballast dar, welcher nicht zur biologischen Reinigungsleistung der Anlage beiträgt und zu betrieblichen Problemen der Anlage führen kann.

Weiterhin erweist es sich als besonders vorteilhaft, wenn Aufwuchskörper verwendet werden, deren Oberfläche eine mittlere Rauheit zwischen 2 µm und 20 µm, bevorzugt von etwa 10 µm aufweist. Hierdurch wird ein schnelles Einwachsen bzw. Anhaften der Bakterien und ein schneller Bewuchs der Oberfläche der Aufwuchskörper mit einem Biofilm gewährleistet. Gleichzeitig wird durch eine derartige mittlere Rauheit ein unerwünschtes vollständiges Abtragen bzw. Abscheren des Biofilmes von der Oberfläche der Aufwuchskörper im Hydrozyklon wirksam verhindert. Durch die nicht abgescherte dünne Schicht des Biofilmes sind die Aufwuchskörper nach der Rückführung in das Belebungsbecken unmittelbar wieder biologisch aktiv und tragen zur Verbesserung der Reinigungsleistung der Anlage bei.

Um eine Zerstörung der Aufwuchskörper während des Verfahrensablaufes, insbesondere während des Passierens der maschinentechnischen Einrichtungen der Anlage, wie beispielsweise der Rührwerke, der Pumpen und der Hydrozyklone zu verhindern und eine praktisch uneingeschränkte Beständigkeit der Aufwuchskörper in dem Abwasser zu gewährleisten, müssen die Aufwuchskörper aus einem hinsichtlich der Zähigkeit, der Härte, der Festigkeit, insbesondere der Zugfestigkeit und der Elastizität optimierten Material bestehen.

Hinsichtlich der Zähigkeit hat es sich als zweckmäßig erwiesen, dass gemäß der vorliegenden Erfindung Aufwuchskörper aus einem Material mit einer Reißdehnung (DIN 53504) von mehr als 700 % verwendet werden. Die Reißdehnung, auch Bruchdehnung genannt, ist ein Materialkennwert, welcher das Verhältnis der Längenänderung zur Ausgangslänge nach dem Bruch des Prüfkörpers angibt. Sie drückt die Fähigkeit eines Werkstoffes aus, Formänderungen ohne Rissbildung zu widerstehen.

Bezüglich der Härte (DIN ISO 7619-1) hat es sich als vorteilhaft erwiesen, dass Aufwuchskörper aus einem Material mit einer Shore-Härte A zwischen 50 und 70, bevorzugt zwischen 55 und 65, verwendet werden. Unter der Shore-Härte versteht man den Widerstand einer Gummiprobe gegen das Eindringen eines kegelförmigen Körpers bestimmter Abmessung unter definierter Druckkraft. Je nach Ausführung des Messkörpers unterscheidet man nach Shore A für weichere Elastomermischungen und Shore D für härtere Elastomermischungen.

Weiterhin hat sich im Hinblick auf die Festigkeit bzw. die Zugfestigkeit herausgestellt, dass Aufwuchskörper aus einem Material mit einer Zugfestigkeit (DIN 53504) von mehr als 5 MPa verwendet werden. Die Zugfestigkeit ist eine Werkstoffeigenschaft, welche die maximale mechanische Zugspannung, die der Werkstoff aushält, bevor er bricht/reißt angibt. Häufig verwendete Maßeinheiten sind MPa (Megapascal) oder N/mm².

Aufwuchskörper mit den vorstehend genannten Materialeigenschaften weisen zusammen mit dem Biofilm eine Absetzgeschwindigkeit von 3 bis 6 m/h auf. Hierzu sollten die Aufwuchskörper eine Dichte von 1, 5 bis 1,7 kg/dm³, besonders bevorzugt von 1,62 kg/dm³, aufweisen. Gleichzeitig muss die Größe bzw. die Korngröße der Aufwuchskörper im Bereich von 0,2 bis 1,0 mm liegen.

Erfindungsgemäß besteht das Material der Aufwuchskörper aus Elastomerwerkstoffen und Polymerblend sowie verschiedenen Zuschlagstoffen.

Elastomerwerkstoffe bestehen grundlegend aus einem Polymer, beispielsweise aus Kautschuk oder einem Polymerblend, einem Verschnitt aus verschiedenen Kautschuken, beispielsweise Naturkautschuk und Styren-Butadien-Kautschuk, und verschiedenen Hilfs- und Zuschlagstoffen sowie Füll- bzw. Verstärkungsstoffen. Eine wesentliche Eigenschaft der Elastomere ist die Gummielastizität (Entropieelastizität), welche auf die bei der Vulkanisation eintretende weitmaschige, irreversible Vernetzung der Kautschukmoleküle zurückzuführen ist. Elastomerwerkstoffe haben im Vergleich zu teilkristallinen Kunststoffen im anwendungstechnischen Bereich niedrige Modulwerte, lassen sich mit relativ geringen Kräften stark verformen und nehmen nach der Entlastung ihre ursprüngliche Form weitgehend wieder an.

Die vorstehend genannten Materialeigenschaften werden durch eine vulkanisierte (vernetzte) Gummimischung erfüllt, welches aus dem Rohmaterial EPDM-Gummi (Ethylen-Propylen-Dien-Kautschuk) und Zusatzstoffen wie mineralischen Füllstoffen (Kreide), Paraffinöl, Verarbeitungshilfen und schwefelbasierten Vernetzern hergestellt wird, die eine doppelte molekulare Haftbrücke bilden. Außerdem ist das Material frei von Phthalaten (Weichmachern) und enthält wenig eluierbares Zink sowie andere Schwermetalle und ist dadurch unbedenklich auch in Wasserschutzgebieten einsetzbar.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Prinzipskizze einer SBR-Anlage zur biologischen Reinigung von Abwasser;
- Fig.2: eine Prinzipskizze einer konventionellen Belebungsanlage zur biologischen Reinigung von Abwasser;
- Fig. 3: eine Prinzipskizze eines in den Figuren 1 und 2 dargestellten Hydrozyklons.

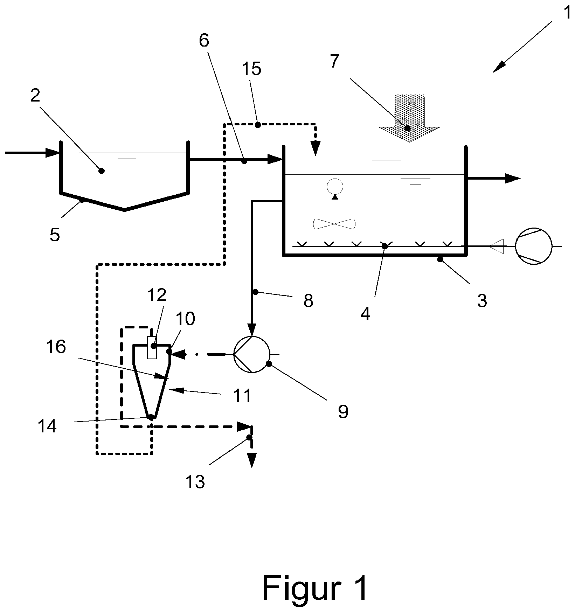

Figur 1 zeigt eine als SBR-Anlage ausgebildete Belebungsanlage 1 zur biologischen Reinigung von Abwasser 2 im Belebtschlammverfahren. Die SBR-Anlage weist ein Belebungsbecken 3 mit einer Belüftung 4 und einem vorgeschalteten Vorklärbecken 5 auf.

Das im Vorklärbecken 5 befindliche Abwasser 2 wird in das Belebungsbecken 3 eingeleitet (Pfeil 6) und mit dem ebenfalls im Belebungsbecken 3 befindlichen Belebtschlamm in intensiven Kontakt gebracht. Zusätzlich werden in das Belebungsbecken 3 Aufwuchskörper aus Kunststoff oder Kautschuk eingebracht, was durch den Richtungspfeil 7 dargestellt ist. Während der Belüftung des im Belebungsbecken 3 angeordneten Gemisches aus Abwasser 2, suspendiertem Belebtschlamm und Aufwuchskörpern, erfolgt die biologische Reinigung des Abwassers 2 im Belebtschlammverfahren. Die im Belebtschlamm enthaltenen Mikroorganismen bzw. Bakterien siedeln sich während der biologischen Reinigung zumindest teilweise auf den Oberflächen der Aufwuchskörper an, sodass auf diesen ein Biofilm aus Mikroorganismen entsteht.

Nach dem biologischen Reinigungsschritt muss die Bakterienmasse bzw. der Belebtschlamm vom gereinigten Abwasser 2 getrennt werden, sodass das dann nahezu feststofffreie Abwasser 2 in einen in Figur 1 nicht dargestellten Vorfluter eingeleitet werden kann. Die Trennung von Belebtschlamm und Abwasser 2 erfolgt durch Sedimentation, also durch einen Absetzvorgang des Belebtschlammes in dem Belebungsbecken 3 der SBR-Anlage während einer Sedimentations- und Dekantierphase. Durch die in dem suspendierten Belebtschlamm enthaltenen bewachsenen Aufwuchskörper ist die Absetzgeschwindigkeit des Gemisches aus Belebtschlamm und bewachsenen Aufwuchskörpern sehr viel höher als die Absetz- bzw. Sedimentationsgeschwindigkeit eines suspendierten Belebtschlammes ohne die Aufwuchskörper. Dies resultiert aus der höheren Dichte der Aufwuchskörper im Vergleich zu dem suspendierten Belebtschlamm und aus der Beschwerung des sedimentierten Schlammbettes durch die schweren Aufwuchskörper. Der suspendierte Belebtschlamm bzw. die Belebtschlammflocken werden durch die schneller sedimentierenden bewachsenen Aufwuchskörper mitgeführt.

Im Anschluss an die Sedimentation wird ein während des biologischen Reinigungsschrittes entstandener überschüssiger Anteil des die bewachsenen Aufwuchskörper enthaltenen Belebtschlammes als Überschussschlamm aus dem Belebungsbecken 3 abgezogen (Pfeil 8) und mittels einer Pumpe 9 über einen Zulauf 10 in eine als Hydrozyklon 11 ausgebildete Separiervorrichtung eingeleitet. In dem Hydrozyklon 11 werden die bewachsenen Aufwuchskörper von dem überschüssigen Belebtschlamm getrennt. Der im Vergleich zu den Aufwuchskörpern leichtere Belebtschlamm wird über einen Oberlauf 12 aus dem Hydrozyklon 11 abgeführt und entsorgt bzw. einer Schlammbehandlung zugeführt (Pfeil 13). Die eine größere Dichte aufweisenden schwereren Aufwuchskörper werden durch einen Unterlauf 14 aus dem Hydrozyklon 11 abgeführt und in das Belebungsbecken 3 der Belebungsanlage 1 zurückgeführt (Pfeil 15).

Während der Trennung der Aufwuchskörper von dem Belebtschlamm im Hydrozyklon 11 wird der auf den Aufwuchskörpern angeordnete Biofilm zumindest teilweise abgetragen bzw. in seiner Dicke reduziert. Durch eine Relativbewegung zwischen den sich schnell bewegenden Aufwuchskörpern und einer ortsfesten Wandfläche 16 des Hydrozyklons 11 werden Kräfte, insbesondere Scherkräfte und/oder Abrasivkräfte erzeugt und in die Aufwuchskörper bzw. den auf diesen angeordneten Biofilm eingeleitet. Hierdurch wird der Biofilm teilweise abgetragen und in seiner Dicke reduziert.

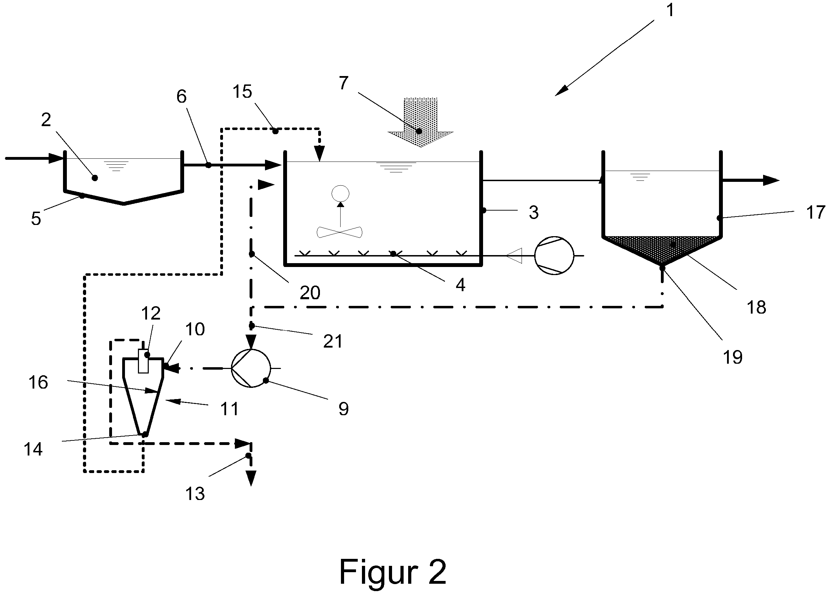

Figur 2 zeigt eine konventionelle Belebungsanlage 1 zur biologischen Reinigung von Abwasser 2 mit einem kontinuierlich durchflossenen Belebungsbecken 3. Die Belebungsanlage 1 weist neben Belebungsbecken 3 und dem vorgeschalteten Vorklärbecken 5 ein dem Belebungsbecken 3 nachgeschaltes Nachklärbecken 17 bzw. Absetzbecken auf.

Das Abwasser 2 wird von dem Vorklärbecken 5 in das Belebungsbecken 3 eingeleitet, in welchem sich auch der Belebtschlamm befindet (Pfeil 6). Der im Belebungsbecken 3 angeordnete suspendierte Belebtschlamm wird nunmehr mit Aufwuchskörpern aus Kunststoff oder Kautschuk versetzt und mittels der Belüftung 4 belüftet, sodass im Belebungsbecken 3 die biologische Reinigung des Abwassers 2 im Belebtschlammverfahren erfolgt. Hierbei kommt es zu einer Besiedlung der Aufwuchskörper mit einem Biofilm aus im Belebtschlamm enthaltenen Mikroorganismen bzw. Bakterien.

Nach dem biologischen Reinigungsschritt im Belebungsbecken 3 wird das Gemisch aus gereinigtem Abwasser 2, suspendiertem Belebtschlamm und bewachsenen Aufwuchskörpern in das Nachklärbecken 17 geleitet, in welchem die bewachsenen Aufwuchskörper und der Belebtschlamm durch Sedimentation vom gereinigten Abwasser 2 getrennt werden. Durch die in dem suspendierten Belebtschlamm enthaltenen bewachsenen Aufwuchskörper ist die Absetzgeschwindigkeit des Belebtschlammes sehr viel höher als die Sedimentationsgeschwindigkeit des suspendierten Belebtschlammes ohne die Aufwuchskörper. Dies resultiert aus der höheren Dichte der Aufwuchskörper im Vergleich zu dem suspendierten Belebtschlamm und aus der Beschwerung des sedimentierten Schlammbettes 18 im Nachklärbecken 17 durch die schweren Aufwuchskörper. Der suspendierte Belebtschlamm wird durch die sich schneller absetzenden bewachsenen Aufwuchskörper mitgerissen. Dann wird der sedimentierte und die bewachsenen Aufwuchskörper enthaltene Belebtschlamm durch einen Ablauf 19 aus dem Nachklärbecken 17 abgeführt und teilweise als Rückführschlamm zurück in das Belebungsbecken 3 geführt (Pfeil 20). Ein überschüssiger Anteil des die bewachsenen Aufwuchskörper enthaltenen Belebtschlammes (Pfeil 21) wird dann als Überschussschlamm mittels einer Pumpe 9 in die als Hydrozyklon 11 ausgebildete Separiervorrichtung eingeleitet.

In dem Hydrozyklon 11 werden dann die bewachsenen Aufwuchskörper von dem überschüssigen Belebtschlamm getrennt. Der im Vergleich zu den Aufwuchskörpern leichtere Belebtschlamm wird über den Oberlauf 12 aus dem Hydrozyklon 11 abgeführt und entsorgt bzw. einer Schlammbehandlung zugeführt (Pfeil 13). Die eine größere Dichte aufweisenden und dadurch schwereren Aufwuchskörper werden durch den Unterlauf 14 aus dem Hydrozyklon11 abgeführt und in das Belebungsbecken 3 der Belebungsanlage 1 zurückgeführt (Pfeil 15).

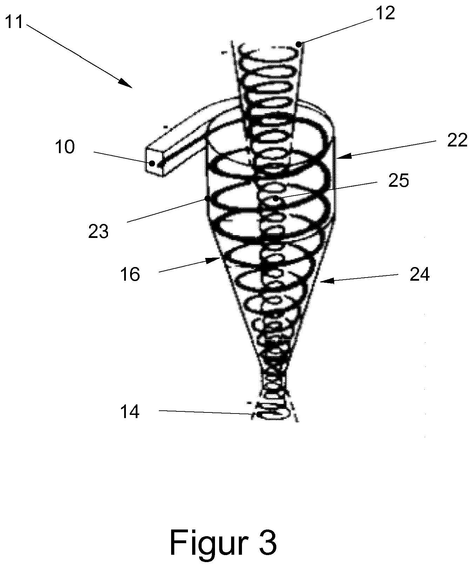

Figur 3 veranschaulicht die Strömungsverhältnisse in dem in den Figuren 1 und 2 dargestellten Hydrozyklon 11. Der aus Belebtschlamm und bewachsen Aufwuchskörpern bestehende Überschussschlamm wird über den Zulauf 10 tangential in ein zylindrisches Segment 22 des Hydrozyklons 11 eingeleitet. Hierdurch wird der Überschussschlamm auf eine Kreisbahn gezwungen und strömt in einem abwärts gerichteten Außenwirbel 23 nach unten. Durch eine Verjüngung in einem konischen Segment 24 des Hydrozyklons 11 kommt es zu einer Verdrängung von Volumen nach innen und zu einem Aufstau im unteren Bereich des Konus, was zur Bildung eines inneren, aufwärtsgerichteten Innenwirbels 25 führt. Die eine größere Dichte aufweisenden bewachsenen Aufwuchskörper werden an der Wandfläche 16 des Hydrozyklons11 abgeschieden und durch den Unterlauf 14 aus dem Hydrozyklon 11 abgeführt, während der eine geringere Dichte aufweisende Belebtschlamm durch den Oberlauf 12 aus dem Hydrozyklon 11 abgeführt wird. Der Überschussschlamm wird in dem dargestellten Hydrozyklon Fliehkräften vom 50- bis 160-fachen der Erdbeschleunigung g ausgesetzt. Durch die Relativbewegung zwischen dem auf die Kreisbahn gezwungenen und sich schnell bewegenden Überschussschlamm und der ortsfesten Wandfläche 16 des Hydrozyklons 11 werden Kräfte in die im Schlamm enthaltenen Aufwuchskörper eingeleitet, welche den auf den Aufwuchskörpern angeordneten Biofilm abtragen bzw. in der Dicke reduzieren.

### Beispiel:

Bei einer zweistraßigen Belebungsanlage zur biologischen Reinigung von Abwasser im Belebtschlammverfahren weist jede der Straßen jeweils einen Schlammindex von ca. 300 ml/g auf. Ein Schlammindex von 150 ml/g gilt in der Fachwelt als ein schlecht absetzender Schlamm, ein Blähschlamm.

Nach der Zugabe von Aufwuchskörpern aus EPDM (Ethylen-Propylen-Dien-Kautschuk) in das Belebungsbecken einer der beiden Straßen und der Durchführung des erfindungsgemäßen Verfahrens verbesserten sich die Schlammabsetzeigenschaften dieser Straße stetig. Acht Wochen nach Aufnahme dieser Betriebsweise hat die Straße mit den eingebrachten Aufwuchskörpern einen Schlammindex von ca. 80 ml/g, Absetzgeschwindigkeiten von 4-5 m/h und Ablaufwerten von 2-5 mg Suspensa/l erreicht und ist darauffolgend auf diesem Niveau verharrt. Die Straße ohne Aufwuchskörper dagegen weist nach acht Wochen einen Schlammindex von über 300 ml/g, eine Absetzgeschwindigkeit von 0,3-0,5 m/h und Ablaufwerten von über 20 mg Suspensa/l auf.

## Patentansprüche

1. Verfahren zur biologischen Reinigung von Abwasser (2) in einer zumindest ein Belebungsbecken (3) aufweisenden Belebungsanlage (1), bei welchem das Abwasser (2) in dem Belebungsbecken (3) mit Belebtschlamm in Kontakt gebracht und gereinigt wird und bei welchem der suspendierte Belebtschlamm nach der Reinigung des Abwassers (2) in einem dem Belebungsbecken (3) nachgeschalteten Nachklärbecken (17) oder im Belebungsbecken (3) durch Sedimentation von dem gereinigten Abwasser (2) getrennt wird, wobei der im Abwasser (2) suspendierte Belebtschlamm in dem Belebungsbecken (3) mit Aufwuchskörpern versetzt wird, um die Aufwuchskörper in Kontakt mit den im Belebtschlamm enthaltenen Mikroorganismen zu bringen und das Entstehen eines Biofilmes aus Mikroorganismen auf den Aufwuchskörpern zu bewirken und dass die aus einem als Kunststoff oder Kautschuk ausgebildeten und elastisch verformbaren Material bestehenden Aufwuchskörper eine größere Dichte aufweisen als das Abwasser (2) und als der suspendierte Belebtschlamm, um eine Erhöhung der Absetzgeschwindigkeit des Belebtschlammes während der Sedimentation in dem Nachklärbecken (17) oder dem Belebungsbecken (3) zu bewirken, wobei ein überschüssiger Anteil des sedimentierten und die bewachsenen Aufwuchskörper enthaltenen Belebtschlammes als Überschussschlamm aus dem Nachklärbecken (17) oder dem Belebungsbecken (3) abgeführt wird, während der andere Anteil des sedimentierten und die bewachsenen Aufwuchskörper enthaltener Belebtschlammes entweder als Rückführschlamm aus dem Nachklärbecken (17) in das Belebungsbecken (3) zurückgeführt wird oder im Belebungsbecken (3) verbleibt, wobei der abgeführte Überschussschlamm einer als Hydrozyklon (11) ausgebildeten Separiervorrichtung zugeführt wird, in welcher die bewachsenen Aufwuchskörper von dem Belebtschlamm getrennt werden, wobei die Aufwuchskörper durch einen Unterlauf (14) des Hydrozyklons (11) in das Belebungsbecken (3) der Belebungsanlage (1) zurückgeführt werden und der abgetrennte Belebtschlamm durch einen Oberlauf (12) des Hydrozyklons (11) austritt und einer Schlammbehandlung zugeführt oder entsorgt wird, wobei nach der Einleitung des Überschussschlammes in den Hydrozyklon (11) die im Vergleich zu dem Belebtschlamm eine größere Dichte aufweisenden Aufwuchskörper durch die Fließ- und Strömungskräfte im Hydrozyklon (11) an einer Wandfläche (16) des Hydrozyklons (11) abgeschieden werden, wobei durch die Relativbewegung der sich bewegenden Aufwuchskörper und der ortsfesten Wandfläche (16) des Hydrozyklons (11) Kräfte, insbesondere Abrasiv- oder Scherkräfte, erzeugt werden, durch welche der auf den Aufwuchskörpern vorhandene Biofilm zumindest teilweise von den Aufwuchskörpern abgetragen wird, wobei Aufwuchskörper aus einem Material mit einem Druckverformungsrest unter 50 % und mit einer Reißdehnung von mehr als 700 % verwendet werden.

2. Verfahren nach zumindest einem der vorhergehenden Ansprüche, **dadurch gekennzeichnet, dass** ein Hydrozyklon (11) verwendet wird, in welchem der eingeleitete Überschussschlamm Fliehkräften vom 50- bis 160-fachen der Erdbeschleunigung (g) ausgesetzt wird.

3. Verfahren nach zumindest einem der vorhergehenden Ansprüche, **dadurch gekennzeichnet, dass** Aufwuchskörper verwendet werden, welche eine Dichte zwischen 1,05 kg/dm³ und 3,0 kg/dm³, bevorzugt zwischen 1,5 kg/dm³ und 1,7 kg/dm³ aufweisen.

4. Verfahren nach zumindest einem der vorhergehenden Ansprüche, **dadurch gekennzeichnet, dass** die Aufwuchskörper verwendet werden, welche eine Größe zwischen 0,01 mm und 10 mm, bevorzugt zwischen 0,2 mm und 1,0 mm aufweisen.

5. Verfahren nach zumindest einem der vorhergehenden Ansprüche, **dadurch gekennzeichnet, dass** die in das Belebungsbecken (3) eingebrachten Aufwuchskörper eine einheitliche Größe aufweisen.

6. Verfahren nach zumindest einem der vorangehenden Ansprüche, **dadurch gekennzeichnet, dass** Aufwuchskörper verwendet werden, deren Oberfläche eine mittlere Rauheit zwischen 2 µm und 20 µm, bevorzugt von 10 µm, aufweist.

7. Verfahren nach zumindest einem der vorangehenden Ansprüche, **dadurch gekennzeichnet, dass** Aufwuchskörper aus einem Material mit einer Shore-Härte A zwischen 50 und 70, bevorzugt zwischen 55 und 65, verwendet werden.

8. Verfahren nach zumindest einem der vorangehenden Ansprüche, **dadurch gekennzeichnet, dass** Aufwuchskörper aus einem Material mit einer Zugfestigkeit von mehr als 5 MPa verwendet werden.

9. Verfahren nach zumindest einem der vorangehenden Ansprüche, **dadurch gekennzeichnet, dass** das Material der Aufwuchskörper aus Elastomerwerkstoff und Polymerblend und zumindest einem Zuschlagstoff besteht

## Claims

1. Method for the biological cleaning of wastewater (2) in an activated-sludge plant (1) comprising at least one activated-sludge tank (3), in which plant the wastewater (2) is contacted with activated sludge in the activated-sludge tank (3) and cleaned and in which plant the suspended activated sludge is, after the cleaning of the wastewater (2), separated from the cleaned wastewater (2) by sedimentation in a secondary clarification tank (17) downstream of the activated-sludge tank (3) or in the activated-sludge tank (3), wherein the activated sludge suspended in the wastewater (2) is admixed with growth bodies in the activated-sludge tank (3) in order to contact the growth bodies with the microorganisms present in the activated sludge and to bring about the formation of a biofilm of microorganisms on the growth bodies and in that the growth bodies consisting of a material which is in the form of plastic or rubber and elastically deformable have a higher density than the wastewater (2) and the suspended activated sludge in order to bring about an increase in the settling rate of the activated sludge during the sedimentation in the secondary clarification tank (17) or the activated-sludge tank (3), wherein an excess fraction of the sedimented activated sludge containing the covered growth bodies is discharged as excess sludge from the secondary clarification tank (17) or the activated-sludge tank (3), whereas the other fraction of the sedimented activated sludge containing the covered growth bodies is either recycled as return sludge from the secondary clarification tank (17) into the activated-sludge tank (3) or remains in the activated-sludge tank (3), wherein the discharged excess sludge is fed to a separation device in the form of a hydrocyclone (11) in which the covered growth bodies are separated from the activated sludge, wherein the growth bodies are recycled into the activated-sludge tank (3) of the activated-sludge plant (1) through an underflow (14) of the hydrocyclone (11) and the removed activated sludge escapes through an overflow (12) of the hydrocyclone (11) and is fed to a sludge treatment unit or disposed of, wherein, after the introduction of the excess sludge into the hydrocyclone (11), the growth bodies having a higher density in comparison with the activated sludge are separated on a wall surface (16) of the hydrocyclone (11) by means of the current and flow forces in the hydrocyclone (11), wherein the relative movement of the moving growth bodies and of the stationary wall surface (16) of the hydrocyclone (11) generates forces, more particularly abrasion forces or shear forces, by means of which the biofilm present on the growth bodies is at least partly removed from the growth bodies, wherein growth bodies composed of a material having a compression set below 50% and having an elongation at break of more than 700% are used.

2. Method according to at least one of the preceding claims, **characterized in that** a hydrocyclone (11) is used in which the introduced excess sludge is exposed to centrifugal forces from 50 to 160 times the acceleration due to gravity (g).

3. Method according to at least one of the preceding claims, **characterized in that** growth bodies are used which have a density between 1.05 kg/dm³ and 3.0 kg/dm³, preferably between 1.5 kg/dm³ and 1.7 kg/dm³.

4. Method according to at least one of the preceding claims, **characterized in that** the growth bodies are used which have a size between 0.01 mm and 10 mm, preferably between 0.2 mm and 1.0 mm.

5. Method according to at least one of the preceding claims, **characterized in that** the growth bodies introduced into the activated-sludge tank (3) have a uniform size.

6. Method according to at least one of the preceding claims, **characterized in that** growth bodies are used, the surface of which has an average roughness between 2 µm and 20 µm, preferably of 10 µm.

7. Method according to at least one of the preceding claims, **characterized in that** growth bodies composed of a material having a Shore A hardness between 50 and 70, preferably between 55 and 65, are used.

8. Method according to at least one of the preceding claims, **characterized in that** growth bodies composed of a material having a tensile strength of more than 5 MPa are used.

9. Method according to at least one of the preceding claims, **characterized in that** the material of the growth bodies consists of elastomer material and polymer blend and at least one additive.

## Revendications

1. Procédé de purification biologique d'eaux usées (2) dans une unité d'activation (1) comprenant au moins un bassin d'activation (3), dans lequel les eaux usées (2) dans le bassin d'activation (3) sont mises en contact avec de la boue activée et purifiées et dans lequel la boue activée en suspension, après la purification des eaux usées (2), est séparée des eaux usées purifiées (2) par sédimentation dans un bassin de décantation (17) raccordé en aval du bassin d'activation (3) ou dans le bassin d'activation (3), la boue activée en suspension dans les eaux usées (2) étant mélangée dans le bassin d'activation (3) avec des corps de culture afin de mettre les corps de culture en contact avec les micro-organismes contenus dans la boue activée et de provoquer la formation d'un biofilm de micro-organismes sur les corps de culture, et en ce que les corps de culture constitués par un matériau configuré sous la forme de matière plastique ou de caoutchouc et déformable élastiquement présentent une masse volumique plus élevée que les eaux usées (2) et que la boue activée en suspension, afin de provoquer une augmentation de la vitesse de dépôt de la boue activée pendant la sédimentation dans le bassin de décantation (17) ou dans le bassin d'activation (3), une fraction excédentaire de la boue activée sédimentée et contenant les corps de culture recouverts étant déchargée du bassin de décantation (17) ou du bassin d'activation (3) sous la forme de boue excédentaire, tandis que l'autre fraction de la boue activée sédimentée et contenant les corps de culture recouverts est soit recyclée sous la forme de boue de recyclage depuis le bassin de décantation (17) jusque dans le bassin d'activation (3), soit reste dans le bassin d'activation (3), la boue excédentaire déchargée étant acheminée vers un dispositif de séparation configuré sous la forme d'un hydrocyclone (11), dans lequel les corps de culture recouverts sont séparés de la boue activée, les corps de culture étant recyclés par un flux inférieur (14) de l'hydrocyclone (11) dans le bassin d'activation (3) de l'unité d'activation (1) et la boue activée séparée sortant par un flux supérieur (12) de l'hydrocyclone (11) et étant acheminée vers un traitement de la boue ou bien éliminée ; après l'introduction de la boue excédentaire dans l'hydrocyclone (11), les corps de culture qui présentent une masse volumique plus élevée en comparaison de la boue activée étant isolés par les forces d'écoulement et de courant dans l'hydrocyclone (11) sur une surface de paroi (16) de l'hydrocyclone (11), des forces, notamment des forces d'abrasion ou de cisaillement, étant générées par le mouvement relatif des corps de culture qui se déplacent et de la surface de paroi fixe (16) de l'hydrocyclone (11), par lesquelles le biofilm présent sur les corps de culture est au moins partiellement décapé des corps de culture, des corps de culture en un matériau ayant une déformation rémanente à la compression inférieure à 50 % et ayant un allongement à la rupture de plus de 700 % étant utilisés.

2. Procédé selon au moins l'une quelconque des revendications précédentes, **caractérisé en ce qu'**un hydrocyclone (11) dans lequel la boue excédentaire introduite est exposée à des forces centrifuges de 50 à 160 fois l'accélération de la pesanteur (g) est utilisé.

3. Procédé selon au moins l'une quelconque des revendications précédentes, **caractérisé en ce que** des corps de culture qui présentent une masse volumique comprise entre 1,05 kg/dm³ et 3,0 kg/dm³, de préférence entre 1,5 kg/dm³ et 1,7 kg/dm³, sont utilisés.

4. Procédé selon au moins l'une quelconque des revendications précédentes, **caractérisé en ce que** des corps de culture qui présentent une taille comprise entre 0,01 mm et 10 mm, de préférence entre 0,2 mm et 1,0 mm, sont utilisés.

5. Procédé selon au moins l'une quelconque des revendications précédentes, **caractérisé en ce que** les corps de culture introduits dans le bassin d'activation (3) présentent une taille uniforme.

6. Procédé selon au moins l'une quelconque des revendications précédentes, **caractérisé en ce que** des corps de culture dont la surface présente une rugosité moyenne comprise entre 2 µm et 20 µm, de préférence de 10 µm, sont utilisés.

7. Procédé selon au moins l'une quelconque des revendications précédentes, **caractérisé en ce que** des corps de culture en un matériau ayant une dureté Shore A comprise entre 50 et 70, de préférence entre 55 et 65, sont utilisés.

8. Procédé selon au moins l'une quelconque des revendications précédentes, **caractérisé en ce que** des corps de culture en un matériau ayant une résistance à la traction de plus de 5 MPa sont utilisés.

9. Procédé selon au moins l'une quelconque des revendications précédentes, **caractérisé en ce que** le matériau des corps de culture est constitué par une matière élastomère et un mélange de polymères et au moins un additif.
